# EUROPEAN PATENT SPECIFICATION

(11) **EP 2 892 215 B1**
(45) Date of publication and mention of the grant of the patent: **22.04.2020**
(21) Application number: 13833384.4
(22) Date of filing: 28.06.2013
(51) Int. Cl.: H04M 1/725, G06T 7/40, H04N 5/225, H04N 5/232, H04M 1/02, H04M 19/04

(54) **METHOD FOR CONTROLLING MOBILE PHONE TO BE MUTE THROUGH FLIP, AND MOBILE PHONE**
VERFAHREN ZUR STEUERUNG EINES MOBILTELEFONS ZUM STUMMSCHALTEN DURCH UMDREHEN UND MOBILTELEFON
PROCÉDÉ POUR LA COMMANDE DE MISE EN SOURDINE DE TÉLÉPHONE MOBILE PAR BASCULEMENT, ET TÉLÉPHONE MOBILE

(30) Priority: 29.08.2012 CN 201210311682
(43) Date of publication of application: 08.07.2015
(73) Proprietor: Huizhou TCL Mobile Communication Co., Ltd., Huizhou, Guangdong 516006 (CN)
(72) Inventor: YU, Bin, Huizhou Guangdong 516006 (CN)
(74) Representative: Brachmann, Roland W.
(86) International application number: PCT/CN2013/078466
(87) International publication number: WO 2014/032472

(56) References cited:
- CN-A- 102 638 598
- CN-A- 102 647 509
- CN-A- 102 833 416
- GB-A- 2 451 943

## Description

The present invention relates to the field of mobile terminals and, in particular, to a method for controlling a mobile phone to be mute through flip and to a mobile phone.

With the development of mobile communication technologies, wireless communication devices are increasingly intelligentized. A smart phone having a function of being mute through flip is now available. The so-called being mute through flip is that a user can automatically switch the situational pattern of a mobile phone into the mute pattern by simply turning the front face of the mobile phone downwards when the mobile phone receives a call. With this function, the user does not have to reject an incoming call in some specific occasions, such as during a meeting or a class, where it is not appropriate to have the incoming ring tone or vibra alert on, and can quickly and conveniently switch the situational pattern of the mobile phone into the mute pattern with a simple flip action of the mobile phone.

However, the existing method for controlling the mobile phone to be mute through flip is generally to implement the mute control by using a gravity sensor, a direction sensor and the like to detect the flip action of the user. The essence of the method is to calculate whether the user makes the flip action of the mobile phone by acquiring the 3D acceleration value of the mobile phone. However, this method can easily cause erroneous judgment. For example, when the mobile phone is in a moving state together with the user, who for instance is riding on a vehicle such as a train, a car and the like, the 3D acceleration value of the mobile phone is affected by the external environment and an erroneous judgment is easily caused. Or, the mobile phone is placed on a supporting surface with certain degree of inclination, for example, the user is having an art class or an English video class, and the desk of the user has an inclination of more than 30 degrees. Because it is not placed horizontally, the mobile phone cannot recognize the flip action when the user flips the phone. Under such circumstances, although the user makes the flip action of the mobile phone, the effect of controlling the mobile phone to be mute cannot be achieved, which brings inconvenience to the user.

Therefore, the prior art still needs to be improved and developed.

GB 2 451 943 A discloses a mobile phone with primary display that has a processing unit adapted to receive input from sensors and in consequence of receiving orientation and movement data from said sensors to automatically change the profile or mode of the device. The sensors may comprise one or more of a gravity operated switch sensor, light sensor and dual axis or tri-axis accelerometer sensor. The phone may detect when it is face down and mute audible alert signals or activate call diversion to a different telephone number, voice mail or similar messaging system.

CN 102647509 A discloses a method for realizing function switching through detecting mobile phone overturn by utilizing an infrared sensor. The method comprises the following steps: 1) starting an infrared near sensor to detect and receive an infrared signal function; 2) when a mobile phone rings or vibrates because of an incoming call, overturning the mobile phone; 3) judging that the overturn action is generated through detecting the intensity of the received infrared signal by the infrared sensor; and 4) controlling the mobile terminal, and switching the function under the current interface of the mobile phone. A device for realizing function switching through detecting mobile phone overturn by the infrared sensor comprises the infrared near sensor, an infrared transmitting tube and a microprocessor CPU (Central Processing Unit). The generated overturn action is judged by detecting the intensity of the received infrared signal by the infrared sensor.

A technical problem to be solved by the present invention is to provide a method for controlling a mobile phone to be mute through flip and a mobile phone regarding the defects of the prior art.

This problem is solved according to the features of the independent claims. Further embodiments result from the depending claims.

The technical solution adopted by the present invention to solve the technical problem is as follows:
The present invention provides a method for controlling a mobile phone to be mute through flip, which comprises the following steps of:
- when a mobile phone receives a call, detecting a situational pattern of the mobile phone;
- if the situational pattern is a ringing pattern, controlling a front-facing camera placed on a plane where the main operation interface of the mobile phone is located to acquire image data every preset time;
- transmitting the image data to a mobile phone base band chip; and
- using the mobile phone base band chip to determine whether the image data is all-black image data and cache storing the determination result; if the current image data is all-black and image data acquired in the previous time is not all-black image data, switching the situational pattern of the mobile phone into a mute pattern, and controlling the front-facing camera to stop acquiring image data.

In an embodiment, the method further comprises:
- monitoring phone hang-up and when monitoring phone hang-up, controlling the mobile phone to stop ringing, and controlling the front-facing camera to stop acquiring the image data.

In an embodiment, the step of transmitting the image data to the mobile phone base band chip comprises:
- using a frame synchronization signal of the front-facing camera to trigger the front-facing camera to transmit the image data to the mobile phone base band chip.

In an embodiment, one frame synchronization signal triggers the front-facing camera to transmit one frame of the image data.

In an embodiment, the step of determining whether the image data is all-black image data comprises:
- determining whether each pixel in the image data is black; and when detecting that one of the pixels is not black, determining that the image data is not all-black image data.

In an embodiment, the step of determining whether the image data is all-black image data comprises:
- if the transmitting format of the image data is YUV, then determining whether all the pixels of the image data satisfy Y=0, U=128 and V=128 one by one; if yes, then determining that the pixel is black;
- if the transmitting format of the image data is RGB, then determining whether all the pixels of the image data satisfy R=0, G=0 and B=0 one by one; if yes, then determining that the pixel is black; and
- when all the pixels included in the image data are black, then determining that the image data is the all-black image data.

The present invention further provides a mobile phone to be mute through flip, which comprises
- a base band chip,
- a front-facing camera and
- a ring output module,
- wherein the base band chip further comprises an image acquisition module, an all-black judgment module, a flip judgment module and a ring control module, wherein:
- the front-facing camera is placed on a plane where the main operation interface of the mobile phone is located, used for acquiring image data every preset time when the mobile phone receives a call and the situational pattern of the mobile phone is a ringing pattern, and transmitting the image data to the image acquisition module;
- the image acquisition module is used for acquiring the image data transmitted by the front-facing camera when the mobile phone receives a call and the situational pattern of the mobile phone is a ringing pattern;
- the all-black judgment module is used for determining whether the image data acquired by the image acquisition module is all-black image data, and cache storing the determination result;
- the flip judgment module is used for sending a mute control message to the ring control module when the all-black judgment module determines that the current image data is all-black image data and the image data acquired in the previous time is not all-black image data, and triggering the base band chip to control the front-facing camera to stop acquiring the image data at the same time; and
- the ring control module is used for controlling the ring output module to output different modes of rings.

In an embodiment, the base band chip further comprises:
- a hang-up monitoring module, used for sending a ring termination message to the ring control module when monitoring a phone hang-up, and also triggering the base band chip to control the front-facing camera to stop acquiring the image data at the same time.

In an embodiment, a frame synchronization signal of the front-facing camera is used to trigger the front-facing camera to transmit the image data to the image acquisition module.

In an embodiment, one frame synchronization signal triggers the front-facing camera to transmit one frame of the image data.

In an embodiment, the all-black judgment module is used for determining whether each pixel in the image data is black; and when detecting that one of the pixels is not black, determining that the image data is not all-black image data.

In an embodiment, the all-black judgment module comprises:
- a first pixel judgment unit, used for determining whether all pixels of the image data satisfy Y=0, U=128 and V=128 when the transmitting format of the image data is YUV; if yes, then determining that the pixel is black;
- a second pixel judgment unit, used for determining whether all the pixels of the image data satisfy R=0, G=0 and B=0 when the transmitting format of the image data is RGB; if yes, then determining that the pixel is black; and
- a first image judgment unit, used for determining that the image data is the all-black image data when all the pixels included in the image data are black; and
- a second image judgment unit, used for determining that the image data is not the all-black image data when one of the pixels is not black.

In an embodiment, the ring control module comprises:
- a mute control unit, used for controlling the ring output module to output mute when receiving the mute control message; and
- a ring termination unit, used for controlling the ring output module to terminate the ring when receiving the ring termination message.

According to the method for controlling a mobile phone to be mute through flip and the mobile phone provided by the present invention, the mobile phone is added with a new function. That is, when the mobile phone receives a call, the mobile phone automatically detects the situational pattern. When the situational pattern is not a mute pattern, the image data is acquired in real time through the front-facing camera of the mobile phone, and the acquired image data is transmitted to the mobile phone base band chip. When determining that the acquired image data is all-black image data and the image data acquired in previous time is not all-black image data, the mobile phone is considered to flip for once, and the mobile phone automatically switches the situational pattern into the mute pattern. Through the technical solution of the present invention, the user can conveniently and quickly switch the situational pattern of the mobile phone into the mute pattern only through a simple flip action of the mobile phone and can make the phone mute without needing to reject the incoming call in some specific occasions which are not suitable for playing the incoming ring or vibra alert such as during a meeting, a class and the like. The mobile phone is particularly suitable for a situation when the mobile phone is under a moving state or located on an inclined plane. Moreover, the mobile phone has a simple structure and high control accuracy, and provides conveniences for the user.

The aforementioned characteristics, features and advantages of the invention as well as the way they are achieved will be further illustrated in connection with the following examples and considerations as discussed in view of the figures.
- FIG.1: is a flow chart of a preferred embodiment of a method for controlling a mobile phone to be mute through flip according to the present invention.
- FIG.2: is a flow chart of determining whether a frame of image data is all-black image data in the preferred embodiment of the method for controlling a mobile phone to be mute through flip according to the present invention.
- FIG.3: is a flow chart of specially applying and implementing the method for controlling a mobile phone to be mute through flip according to the present invention.
- FIG.4: is a structure block diagram of a preferred embodiment of a mobile phone to be mute through flip according to the present invention.
- FIG.5: is a schematic diagram for connecting a front-facing camera and an image acquisition module of the preferred embodiment of the mobile phone to be mute through flip according to the present invention.
- FIG.6: is a specific structure block diagram of an all-black judgment module of the preferred embodiment of the mobile phone to be mute through flip according to the present invention.
- FIG.7: is a specific structure block diagram of a ring control module of the preferred embodiment of the mobile phone to be mute through flip according to the present invention.

To make the objective, technical solution and advantages of the present invention more clear, the present invention is further described in detail with reference to the drawings and embodiments hereinafter. It should be understood that the specific embodiments described here are merely used for explaining the present invention, but are not intended to limit the present invention.

Embodiments of the present invention provide a mobile phone to be mute through flip, which may be used for performing the method for controlling a mobile phone to be mute through flip provided by the embodiments of the present invention. To be specific, in the embodiment, the mobile phone to be mute through flip comprises a memory and one or more than one program, wherein the one or more than one program is stored in the memory, and is configured to perform the method for controlling a mobile phone to be mute through flip according to the embodiments of the present invention through one or more than one processor. Certainly, the method for controlling a mobile phone to be mute through flip according to the embodiments of the present invention may also be used for other electronic mobile terminals, which include but are not limited to smartphones, tablet computers, e-book readers and MP4s (Moving Picture Experts Group Audio Layer IV) player and the like.

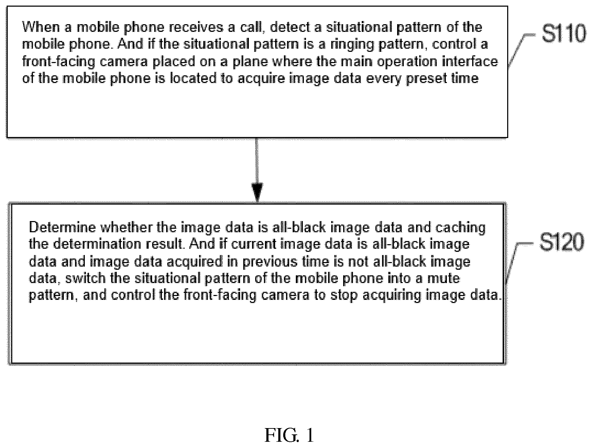

FIG.1 is a flow chart of a preferred embodiment of a method for controlling a mobile phone to be mute through flip according to the present invention. The method comprises the following steps.

Step S110: When a mobile phone receives a call, the mobile phone automatically detects a situational pattern of the mobile phone. When the situational pattern is not a mute pattern (such as a ringing pattern), image data is acquired through a front-facing camera placed on a plane where the main operation interface of the mobile phone is located, and the acquired image data is transmitted to a mobile phone base band chip. The plane where the main operation interface of the mobile phone is located is a flat plane, and the front-facing camera is placed on the plane. Preferably, the front-facing camera of the mobile phone acquires image data every preset time. The preset time may be 100ms, 50ms and the like. The value may be set and saved in a mobile phone system when delivery. For example, the front-facing camera of the mobile phone acquires the image data in every 50ms, and the image data acquired in every time may either be a frame of image data or multiple frames of image data.

Step S120: Determine whether the image data is all-black image data and caching the determination result. When determining that the currently acquired image data is all-black image data, check whether the cached image data acquired in the previous time is all-black image data. When the currently acquired image data is all-black image data and the image data acquired in the previous time is not all-black image data, the mobile phone is considered to flip for once, the situational pattern of the mobile phone is controlled to switch to the mute pattern, and the front-facing camera is controlled to stop continuously acquiring the image data.

Under a normal situation, the mobile phone is placed with the front side upwards. After flip of the mobile phone, the front side of the mobile phone is downwards and is in contact with such a supporting surface as a desktop and the like. At this time, the image data captured by the front-facing camera installed on the plane (namely the front side of the mobile phone) of the main operation interface of the mobile phone is certainly all-black image data. When the mobile phone is placed in a pocket or bag, although the image data acquired by the mobile phone is all-black image data, the ringing pattern of the mobile phone may not be automatically switched to the mute pattern at this moment because the image data acquired in the previous time is also all-black image data, and the mobile phone does not have an action of changing from a non-all-black environment to an all-black environment. Adopting the method according to the present invention to recognize whether the mobile phone has a flip action so as to control the mobile phoen to switch the situational pattern, which is not limited by the supporting surface for placing the mobile phone and the acceleration of the located environment; therefore, the control accuracy is very high. Meanwhile, by comparing the image data acquired twice, a situation that the user misses the incoming call due to the mute of the incoming call of the mobile phone when the user puts the mobile phone in the pocket or bag is also avoided.

In addition, in the embodiments of the present invention, when the mobile phone receives a call, the mobile phone base band chip monitors whether a hang-up signal exists in real time. When monitoring that the other side hangs up the call, the mobile phone is controlled to terminate ringing. Meanwhile, the front-facing camera is controlled to stop acquiring the image data. The step may be carried out independently, and is not influenced by the implementing step of mute control through flip.

Preferably, step S110 specifically comprises the steps as follows: when a mobile phone receives a call, the mobile phone automatically detects the situational pattern thereof; if the situational pattern is a ringing pattern, the front-facing camera of the mobile phone is controlled to acquire image data every preset time, wherein a frame of image data is acquired in every time. The front-facing camera is triggered by the frame synchronization signal to transmit the acquired image data of the current frame to the base band chip; moreover, the front-facing camera is triggered to transmit a frame of image data in each time when receiving a frame synchronization signal.

Further, one frame of images consists of a plurality of pixels, for example, one frame of images consists of CMAX pixels; therefore, the step of determining whether the image data is all-black image data comprises: determining whether all the pixels of the image data are black one by one, wherein in the embodiment, determining whether all the pixels of the image are black according to the format of the image data transmitted between the base band chip and the front-facing camera comprises two situations as follows.

Situation I: When the transmitting format of the image data is YUV, the data of the image pixel transmitted at this time comprises three variable Y, U and V which represent the pixel colors. When the three variables of the data of one pixel are Y=0, U=128 and V=128, it represents that the pixel is black. Determining whether all the pixels of the image data satisfy Y=0, U=128 and V=128 one by one is to determine whether all the pixels of the image data are black one by one. When all the pixels included in the image data are black, the image data is considered as all-black image data.

Situation II: When the transmitting format of the image data is RGB, the data of the image pixel transmitted at this time comprises three variables R, G and B which represent the color variables of the pixels. When the three variables of the data of one pixel are R=0, G=0 and B=0, it represents that the pixel is black. Determining whether all the pixels of the image data satisfy R=0, G=0 and B=0, one by one is to determine whether all the pixels of the image data are black one by one. When all the pixels included in the image data are black, the image data is considered as all-black image data.

Preferably, in the foregoing two situations, when a certain pixel in the image is determined not to be black, then the image data is directly determined to be not all-black image data without needing to determine whether other pixels of the image are black, which is beneficial for saving memory, and improving the running speed of the system.

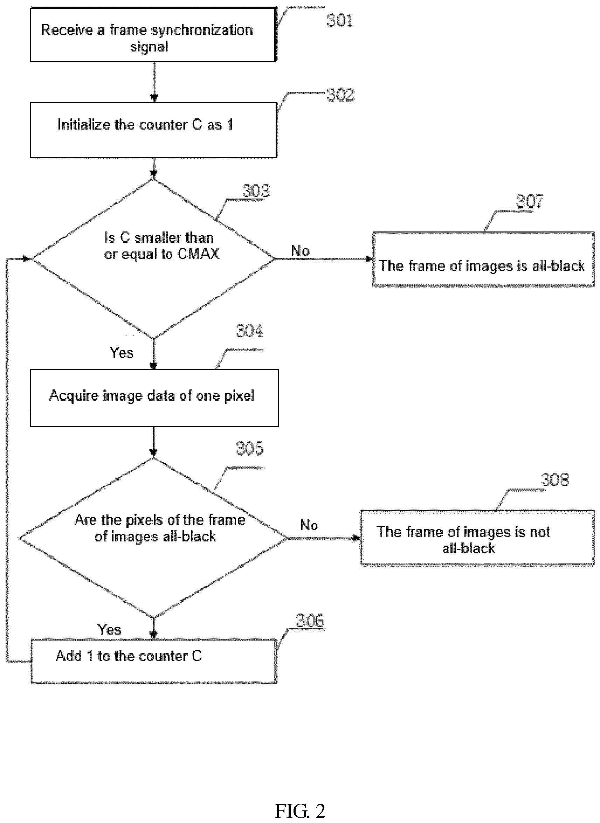

Preferably, a specific implementation process is taken as an example to further interpret the determining of the foregoing all-black image. FIG.2 is a flow chart of determining whether one frame of image data is all-black image data in a method for controlling a mobile phone to be mute through flip according to the present invention. As shown in FIG.2, if one frame of images consists of CMAX pixels, then the step of determining the all-black data specifically comprises the following steps.
Step 301: The front-facing camera receives one frame synchronization signal and transmits one frame of image data to the mobile phone base band chip. To be specific, the front-facing camera receives one frame synchronization signal and transmits the CMAX pixel data of one frame of images to the mobile phone base band chip.
Step 302: The base band chip initializes a counter C, wherein an initial value is 1. Then enter step 303.
Step 303: Compare the current value of the counter C with the number CMAX of the pixels included in the image, and detect whether the current value of the counter C is smaller than or equal to the CMAX; if yes, then enter step 304; otherwise, enter step 307.
Step 304: Acquire the data of one pixel from the image data of the current frame, and enter step 305.
Step 305: Determine whether the currently acquired pixel data is black by using a specific determining method as described above. If the current pixel is black, then enter step 306; otherwise, enter step 308.
Step 306: Add 1 for the counter C, return to step 303 and continuously determine whether other pixel data is black.
Step 307: When all the pixels included in the image data are black, determine the image data as all-black image data. Finish the process of determining the all-black image data.
Step 308: When a certain pixel in the image is found not to be black, directly determine that the image data is not all-black image data without needing to determine whether other pixels of the image are black. Finish the process of determining the all-black image data.

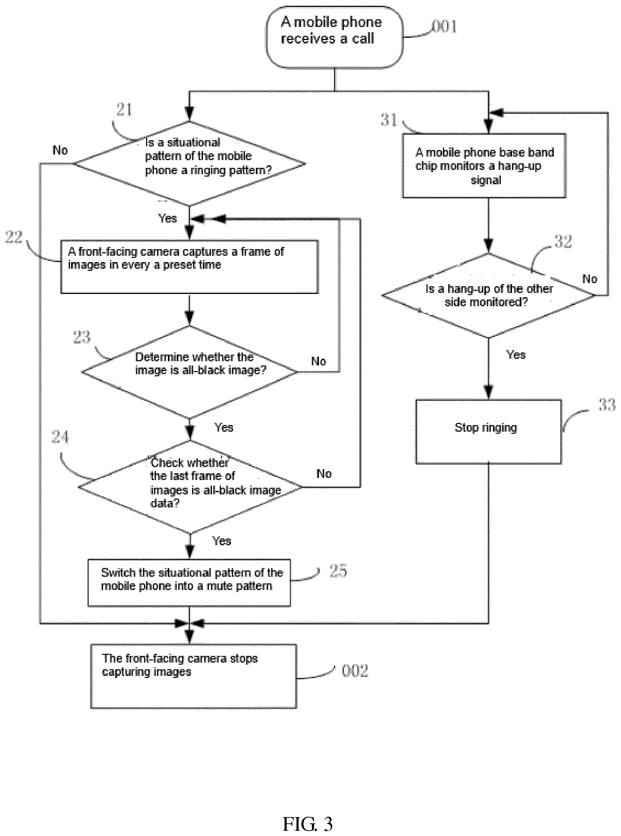

Further, a specific implementation process is taken as an example to further interpret the method for controlling a mobile phone to be mute through flip according to the present invention. FIG.3 is a flow chart of specially applying and implementing the method for controlling a mobile phone to be mute through flip according to the present invention. As shown in FIG.3, the method comprises the following steps.
Step 001: The mobile phone receives a call, and enter step 21.
Step 21: The mobile phone monitors whether the situational pattern thereof is not a mute pattern; if the situational pattern is a mute pattern, directly skip to step 002. Otherwise, enter step 22.
Step 22: The front-facing camera captures a frame of images in every preset time, and transmits the frame of images captured to the mobile phone base band chip.
Step 23: The mobile phone base band chip determines whether the image data is all-black image data; if yes, enter step 24; otherwise, return to step 22.
Step 24: Check whether last frame of images is all-black image data; if yes, then enter step 25; otherwise, return to step 22.
Step 25: Control the mobile phone to switch the situational pattern of the mobile phone into the mute pattern, and enter step 002.
Step 002: Control the front-facing camera of the mobile phone to stop continuously capturing images, and the mobile phone finishes mute control through flip.

Meanwhile, the mobile phone base band chip further monitors whether a hang-up signal exists in real time. Therefore, in the embodiment, after the process of mute control through flip of the mobile phone when receiving a call, namely after the step 001, the following steps are entered at the same time.
Step 001: The mobile phone receives a call, and enter step 31 at the same time.
Step 31: The mobile phone base band chip monitors a hang-up signal in real time.
Step 32: Is the hang-up of the other side monitored? If yes, enter step 33; otherwise, return to step 31 and continuously monitor a hang-up signal.
Step 33: When monitoring the hang-up of the other side, the mobile phone stops ringing; then immediately enter step 002.
Step 002: The front-facing camera stops capturing images.

Because steps 31 ∼ 33 are performed asynchronously from steps 21 ∼ 25, no matter which one of steps 21, 22, 23, 24 and 25 is performed, the performing of steps 31 ∼ 33 is not influenced. Moreover, as long as the determination result of step 32 is true; to be specific, once the hang-up of the incoming call is monitored, immediately perform step 33 and enter step 002. The function of being mute through flip is also closed, which namely terminates performing steps 21 ∼ 25 immediately.

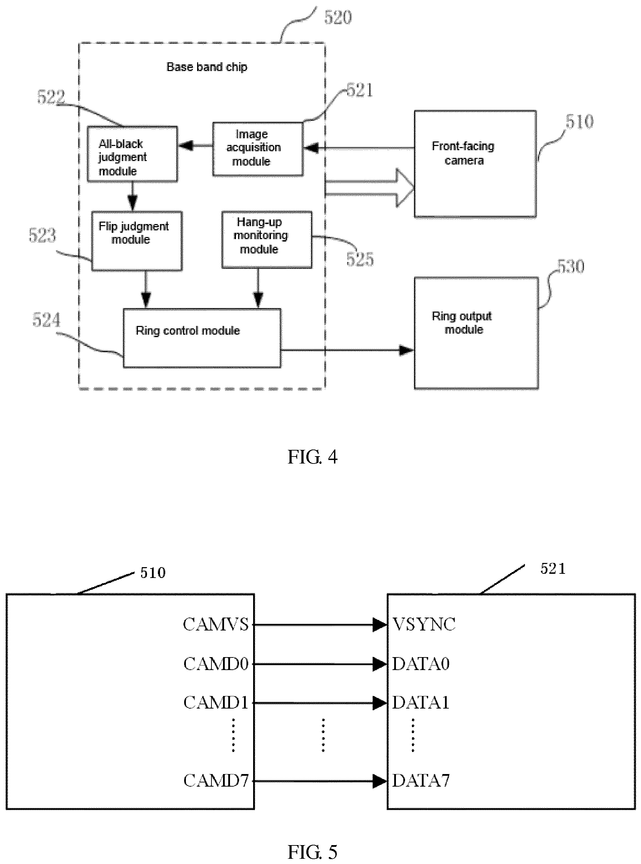

Based on the foregoing embodiments, the embodiments of the present invention further provide a mobile phone to be mute through flip. As shown in FIG.4, the mobile phone comprises a front-facing camera 510, a base band chip 520 and a ring output module 530, wherein the base band chip 520 further comprises an image acquisition module 521, an all-black judgment module 522, a flip judgment module 523, a ring control module 524 and a hang-up detection module 525.

The front-facing camera 510 is set on the main operation interface of the mobile phone, which is used for acquiring image data every preset time when the mobile phone receives a call and the situational pattern of the mobile phone is in the ringing pattern, and transmitting the image data to the base band chip 520. The preset time may be 100ms, 50ms and the like. The value may be set and saved in a mobile phone system when delivery. The details are as described in the foregoing embodiments and will not be repeatedly described any longer.

The image acquisition module 521 is used acquiring the image data transmitted by the front-facing camera 510 when the mobile phone receives a call and the situational pattern of the mobile phone is a ringing pattern. The details are as described in the foregoing embodiments.

The all-black judgment module 522 is used for determining whether the image data received by the image acquisition module 521 is all-black image data and cache storing the determination result. The details are as described in the foregoing embodiments.

The flip judgment module 523 is used for checking, when the all-black judgment module 522 determines that the currently acquired image data is all-black image data, whether the determination result of the all-black judgment module 522 for the image data acquired in the previous time is not all-black image data; when the image data acquired in the previous time is not all-black image data, then determining a flip action occurs to the mobile phone, and sending a mute control message to the ring control module 524. The details are as described in the foregoing embodiments.

The hang-up monitoring module 525 is used for monitoring a hang-up signal, and sending a ring termination message to the ring control module 524 when monitoring that the other side hangs up the call. The details are as described in the foregoing embodiments.

The ring control module 524 is connected with the ring output module 530, and is used for controlling the ring output module 530 to output mute after receiving the mute control message, and used for controlling the ring output module 530 to terminate to output ring after receiving the ring termination message.

Further, the base band chip 520 is further used for controlling the front-facing camera 510 to stop continuously capturing the image (acquiring the image data) when the flip judgment module 523 determines that a flip action occurs to the mobile phone, or the hang-up monitoring module 525 monitors that the other side hangs up the call. The details are as described in the foregoing embodiments.

Further, the situation that the front-facing camera 510 is connected with the image acquisition module 521 of the mobile phone base band chip is shown in FIG.5. A frame synchronization signal line CAMVS of the front-facing camera 510 is connected with a frame synchronization signal line VSYNC of the image acquisition module 521. The data signal lines CAMD0 ∼ CAMD7 of the front-facing camera 510 are respectively connected with the data signal lines DATA0 ∼ DATA7 of the image acquisition module 521. Through this connecting relationship, when the front-facing camera receives a frame synchronization signal, the specific process of transmitting one frame of image data is as follows: when the frame synchronization signal line CAMVS of the front-facing camera changes from a low level to a high level, the image acquisition module 521 is triggered to start receiving a frame of image data; the CMAX pixels of the frame of image data are outputted one by one through the data signal lines CAMD0 ∼ CAMD7 of the front-facing camera, and received by the data signal lines DATA0 ∼ DATA7 of the image acquisition module 521; when the frame synchronization signal line CAMVS changes from a high level to a lower level, the image acquisition module 521 is notified that the current frame of image data is completely transmitted, and the data signal lines DATA0 ∼ DATA7 of the image acquisition module 521 stop receiving data.

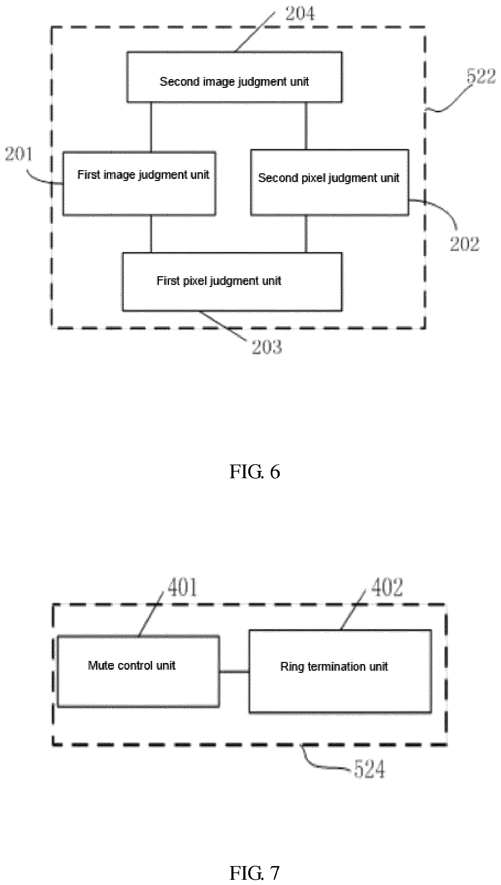

Preferably, as shown in FIG.6, the all-black judgment module 522 further comprises:
a first pixel judgment unit 201 used for determining whether all pixels of the image data satisfy Y=0, U=128 and V=128 when the transmitting format of the image data is YUV; if yes, then determining that the pixel is black;
a second pixel judgment unit 202 used for determining whether all the pixels of the image data satisfy R=0, G=0 and B=0 when the transmitting format of the image data is RGB; if yes, then determining that the pixel is black;
a first image judgment unit 203 used for determining that the image data is the all-black image data when all the pixels included in the image data are black; and
a second image judgment unit 204 used for determining that the image data is not the all-black image data when detecting that one of the pixels is not black.

Preferably, as shown in FIG.7, the ring control module 524 further comprises:
a mute control unit 401 used for controlling the ring output module 530 to output mute when receiving the mute control message; and
a ring termination unit 402 used for controlling the ring output module 530 to terminate the ring when the hang-up monitoring module 521 monitors that the other side hangs up the call.

Further, as illustrated in the embodiment of the present invention, the main operation interface of the mobile phone is a flat plane, and the front camera placed on the plane.

To sum up, according to the method for controlling a mobile phone to be mute through flip and the mobile phone provided by the present invention, the mobile phone is added with a new function. That is, when the mobile phone receives a call, the mobile phone automatically detects the situational pattern. When the situational pattern is not a mute pattern, the image data is acquired in real time through the front-facing camera of the mobile phone, and the acquired image data is transmitted to the mobile phone base band chip. When determining that the acquired image data is all-black image data and the image data acquired in the previous time is not all-black image data, a flip action is considered to occur to the mobile phone, and the mobile phone automatically switches the situational pattern into the mute pattern. Through the technical solution of the present invention, the user can conveniently and quickly switch the situational pattern of the mobile phone into the mute pattern only through a simple flip action of the mobile phone and can make the phone mute without needing to reject the incoming call in some specific occasions which are not suitable for playing the incoming ring or vibra alert such as during a meeting, a class and the like. The mobile phone is particularly suitable for a situation when the mobile phone is under a moving state or located on an inclined plane. Moreover, the mobile phone has a simple structure and high control accuracy, and provides convenience for the user.

A person having ordinary skill in the art may understand that all or partial flows for implementing the methods according to the foregoing embodiments are programs that may be finished by relational hardware instructed by a computer program, and may be stored in a readable storage medium. The program while in performing may comprise the flows of each method according to the foregoing embodiments. The storage medium may be a disk, an optical disk, a read-only memory (ROM) or a random access memory (RAM), and the like.

## Claims

1. A method for controlling a mobile phone to be mute through flip, comprising the following steps of:
- when a mobile phone receives a call (001), detecting a situational pattern of the mobile phone (S110, 21);
- if the situational pattern is in a ringing pattern, controlling a front-facing camera (510) placed on a plane where the main operation interface of the mobile phone is located to acquire image data every preset time;
- transmitting the image data to a mobile phone base band chip (520); and
- using the mobile phone base band chip (520) to determine whether the image data is all-black image data and cache storing the determination result (S120, 23);
- if the current image data is all-black and image data acquired in previous time is not all-black image data, switching the situational pattern of the mobile phone into a mute pattern (24, 25), and controlling the front-facing camera to stop acquiring image data (S120, 002).

2. The method for controlling a mobile phone to be mute through flip according to the preceding claim, wherein the step of transmitting the image data to the mobile phone base band chip (520) comprises:
- using a frame synchronization signal of the front-facing camera (510) to trigger the front-facing camera (510) to transmit the image data to the mobile phone base band chip (520).

3. The method for controlling a mobile phone to be mute through flip according to claim 2, wherein one frame synchronization signal triggers the front-facing camera (510) to transmit one frame of the image data.

4. The method for controlling a mobile phone to be mute through flip according to any of the preceding claims, further comprising the step of:
- monitoring phone hang-up (31) and when monitoring phone hang-up (31), controlling the mobile phone to stop ringing (33), and controlling the front-facing camera to stop acquiring the image data (002).

5. The method for controlling a mobile phone to be mute through flip according to any of the preceding claims, wherein the step of determining whether the image data is all-black image data comprises:
- determining whether each pixel in the image data is black (305); and when detecting that one of the pixels is not black, determining that the image data is not all-black image data (308).

6. The method for controlling a mobile phone to be mute through flip according to any of the preceding claims, wherein the step of determining whether the image data is all-black image data comprises:
- if the transmitting format of the image data is YUV, then determining whether all the pixels of the image data satisfy Y=0, U=128 and V=128; if yes, then determining that the pixel is black;
- if the transmitting format of the image data is RGB, then determining whether all the pixels of the image data satisfy R=0, G=0 and B=0; if yes, then determining that the pixel is black; and
- when all the pixels included in the image data are black (305), then determining that the image data is the all-black image data (307).

7. A mobile phone to be mute through flip, comprising:
- a base band chip (520) which comprises an image acquisition module (521), an all-black judgment module (522), a flip judgment module (523) and a ring control module (524);
- a front-facing camera (510) placed on the main operation interface of the mobile phone, adapted to acquire image data every preset time when the mobile phone receives a call and the situational pattern of the mobile phone is a ringing pattern, and adapted to transmit the image data to the image acquisition module (521); and
- a ring output module (530),
wherein
- the image acquisition module (521) is adapted to acquire the image data transmitted by the front-facing camera (510) when the mobile phone receives a call and the situational pattern of the mobile phone is a ringing pattern;
- the all-black judgment module (522) is adapted to determine whether the image data acquired by the image acquisition module (521) is all-black image data and is adapted to cache storing the determination result;
- the flip judgment module (523) is adapted to send a mute control message to the ring control module (524) when the all-black judgment module (522) determines that the current image data is all-black image data and the image data acquired in the previous time is not all-black image data, and is adapted to trigger the base band chip (520) to control the front-facing camera (510) to stop acquiring the image data at the same time; and
- the ring control module (524) is adapted to control the ring output module (530) to output different modes of rings.

8. The mobile phone to be mute through flip according to claim 7, wherein the base band chip (520) further comprises:
- a hang-up monitoring module (525) adapted to send a ring termination message to the ring control module (524) when monitoring a phone hang-up, and also adapted to trigger the base band chip (520) to control the front-facing camera (510) to stop acquiring the image data at the same time.

9. The mobile phone to be mute through flip according to any of claims 7 or 8, wherein the front-facing camera (510) is adapted to be triggered to transmit the image data to the image acquisition module (521) based on a frame synchronization signal of the front-facing camera (510).

10. The mobile phone to be mute through flip according to claim 9, wherein the front-facing camera (510) is adapted to be triggered to transmit one frame of the image data based on one frame synchronization signal.

11. The mobile phone to be mute through flip according to any of claims 7 to 10, wherein the all-black judgment module (522) is adapted to determine whether each pixel in the image data is black; and when detecting that one of the pixels is not black, it is adapted to determine that the image data is not all-black image data.

12. The mobile phone to be mute through flip according to any of claims 7 to 11, wherein the all-black judgment module (522) comprises:
- a first pixel judgment unit (203) adapted to determine whether all pixels of the image data satisfy Y=0, U=128 and V=128 when the transmitting format of the image data is YUV; if yes, then adapted to determine that the pixel is black;
- a second pixel judgment unit (202) used for determining whether all the pixels of the image data satisfy R=0, G=0 and B=0 when the transmitting format of the image data is RGB; if yes, then determining that the pixel is black; and
- a first image judgment unit (201) adapted to determine that the image data is the all-black image data when all the pixels included in the image data are black; and
- a second image judgment unit(204) adapted to determine that the image data is not the all-black image data when one of the pixels is not black.

13. The mobile phone according to any of claims 7 to 12, wherein the ring control module (524) comprises:
- a mute control unit (401) adapted to control the ring output module (530) to output mute when receiving the mute control message; and
- a ring termination unit (402) adapted to control the ring output module (530) to terminate the ring when receiving the ring termination message.

## Patentansprüche

1. Verfahren zum Stummsteuern eines Mobiltelefons durch Umdrehen, das die folgenden Schritte umfasst:
- wenn ein Mobiltelefon einen Anruf empfängt (001), Detektieren eines Situationsmusters des Mobiltelefons (S110, 21);
- falls das Situationsmuster in einem Klingelmuster auftritt, Steuern einer frontweisenden Kamera (510), die auf einer Ebene platziert ist, in der sich die Hauptbetriebsschnittstelle des Mobiltelefons befindet, jeweils zu jedem vorbestimmten Zeitpunkt um Bilddaten zu erfassen;
- Übertragen der Bilddaten an einen Mobiltelefon-Basisbandchip (520); und
- Verwenden des Mobiltelefon-Basisbandchips (520) zum Bestimmen, ob die Bilddaten Vollschwarz-Bilddaten sind, und Zwischenspeichern des Bestimmungsergebnisses (S120, 23);
- wenn die Bilddaten vollschwarz sind und die zu früheren Zeitpunkten erfassten Bilddaten keine Vollschwarz-Bilddaten sind, Umschalten des Situationsmusters des Mobiltelefons in ein Stummmuster (24, 25) und Steuern der frontweisenden Kamera, um einErfassen von Bilddaten zu stoppen (S120, 002).

2. Verfahren zum Stummsteuern eines Mobiltelefons durch Umdrehen nach dem vorhergehenden Anspruch, wobei der Schritt des Übertragens der Bilddaten zu dem Mobiltelefon-Basisbandchip (520) Folgendes umfasst:
- Verwenden eines Framesynchronisationssignals der frontweisenden Kamera (510) zum Triggern der frontweisenden Kamera (510), die Bilddaten an den Mobiltelefon-Basisbandchip (520) zu übertragen.

3. Verfahren zum Stummsteuern eines Mobiltelefons durch Umdrehen nach Anspruch 2, wobei ein Framesynchronisationssignal die frontweisende Kamera (510) triggert, einen Frame der Bilddaten zu übertragen.

4. Verfahren zum Stummsteuern eines Mobiltelefons durch Umdrehen nach einem der vorhergehenden Ansprüche, ferner umfassend den folgenden Schritt:
- Überwachen auf ein Telefonauflegen (31) und beim Überwachen auf das Telefonauflegen (31) Steuern des Mobiltelefons, das Klingeln zu stoppen (33), und Steuern der frontweisenden Kamera, das Erfassen der Bilddaten zu stoppen (002).

5. Verfahren zum Stummsteuern eines Mobiltelefons durch Umdrehen nach einem der vorhergehenden Ansprüche, wobei der Schritt des Bestimmens, ob die Bilddaten Vollschwarz-Bilddaten sind, Folgendes umfasst:
- Bestimmen, ob jedes Pixel in den Bilddaten schwarz ist (305); und wenn detektiert wird, dass eines der Pixel nicht schwarz ist, Bestimmen, dass die Bilddaten keine Vollschwarz-Bilddaten sind (308).

6. Verfahren zum Stummsteuern eines Mobiltelefons durch Umdrehen nach einem der vorhergehenden Ansprüche, wobei der Schritt des Bestimmens, ob die Bilddaten Vollschwarz-Bilddaten sind, Folgendes umfasst:
- falls das Übertragungsformat der Bilddaten YUV ist, dann Bestimmen, ob alle der Pixel der Bilddaten Y=0, U=128 und V=128 erfüllen; wenn ja, dann Bestimmen, dass das Pixel schwarz ist;
- falls das Übertragungsformat RGB ist, dann Bestimmen, ob alle der Pixel der Bilddaten R=0, G=0 und B=0 erfüllen; wenn ja, dann Bestimmen, dass das Pixel schwarz ist; und
- wenn alle in den Bilddaten enthaltenen Pixel schwarz sind (305), dann Bestimmen, dass die Bilddaten die Vollschwarz-Bilddaten sind (307).

7. Mobiltelefon, das durch Umdrehen stummgesteuert wird, aufweisend:
- einen Basisbandchip (520), der ein Bilderfassungsmodul (521), ein Vollschwarz-Beurteilungsmodul (522), ein Umdrehung-Beurteilungsmodul (523) und ein Klingelsteuerungsmodul (524) umfasst;
- eine frontweisende Kamera (510), die auf der Hauptbetriebsschnittstelle des Mobiltelefons platziert ist, eingerichtet zum Erfassen von Bilddaten jeweils zu jedem vorbestimmten Zeitpunkt, wenn das Mobiltelefon einen Anruf empfängt und das Situationsmuster des Mobiltelefons ein Klingelmuster ist, und eingerichtet zum Übertragen der Bilddaten an das Bilderfassungsmodul (521); und
- ein Klingelausgabemodul (530),
wobei
- das Bilderfassungsmodul (521) eingerichtet ist zum Erfassen der von der frontweisenden Kamera (510) übertragenen Bilddaten, wenn das Mobiltelefon einen Anruf empfängt und das Situationsmuster des Mobiltelefons ein Klingelmuster ist;
- das Vollschwarz-Beurteilungsmodul (522) eingerichtet ist zum Bestimmen, ob die durch das Bilderfassungsmodul (521) erfassten Bilddaten Vollschwarz-Bilddaten sind, und eingerichtet ist zum Zwischenspeichern des Bestimmungsergebnisses;
- das Umdrehung-Beurteilungsmodul (523) eingerichtet ist zum Senden einer Stummsteuernachricht an das Klingelsteuerungsmodul (524), wenn das Vollschwarz-Beurteilungsmodul (522) bestimmt, dass die aktuellen Bilddaten Vollschwarz-Bilddaten sind und die zu früheren Zeitpunkten erfassten Bilddaten keine Vollschwarz-Bilddaten sind, und eingerichtet ist zum Triggern des Basisbandchips (520), die frontweisende Kamera (510) zu steuern, das Erfassen der Bilddaten zur gleichen Zeit zu stoppen; und
- das Klingelsteuerungsmodul (524) eingerichtet ist zum Steuern des Klingelausgabemoduls (530), um verschiedene Klingelmodi auszugeben.

8. Mobiltelefon, das durch Umdrehen stummgesteuert wird, nach Anspruch 7, wobei der Basisbandchip (520) ferner Folgendes umfasst:
- ein Auflegen-Überwachungsmodul (525), eingerichtet zum Senden einer Klingeln-beenden-Nachricht an das Klingelsteuerungsmodul (524), wenn ein Telefonauflegen überwacht wird, und auch eingerichtet ist zum Triggern des Basisbandchips (520), die frontweisende Kamera (510) zu steuern, um zum gleichen Zeitpunkt Erfassen der Bilddaten zu stoppen.

9. Mobiltelefon, das durch Umdrehen stummgesteuert wird, nach einem der Ansprüche 7 oder 8, wobei die frontweisende Kamera (510) dazu eingerichtet ist, getriggert zu werden, um die Bilddaten basierend auf einem Framesynchronisationssignal der frontweisenden Kamera (510) an das Bilderfassungsmodul (521) zu übertragen.

10. Mobiltelefon, das durch Umdrehen stummgesteuert wird, nach Anspruch 9, wobei die frontweisende Kamera (510) dazu eingerichtet ist, getriggert zu werden, um einen Frame basierend auf einem Framesynchronisationssignal zu übertragen.

11. Mobiltelefon, das durch Umdrehen stummgesteuert wird, nach einem der Ansprüche 7 bis 10, wobei das Vollschwarz-Beurteilungsmodul (522) eingerichtet ist zum Bestimmen, ob jedes Pixel in den Bilddaten schwarz ist; und wenn detektiert wird, dass eines der Pixel nicht schwarz ist, es eingerichtet ist, zu bestimmen, dass die Bilddaten keine Vollschwarz-Bilddaten sind.

12. Mobiltelefon, das durch Umdrehen stummgesteuert wird, nach einem der Ansprüche 7 bis 11, wobei das Vollschwarz-Beurteilungsmodul (522) aufweist:
- eine erste Pixel-Beurteilungseinheit (203), die eingerichtet ist zum Bestimmen, ob alle der Pixel der Bilddaten Y=0, U=128 und V=128 erfüllen, wenn das Übertragungsformat der Bilddaten YUV ist; wenn ja, dann ist es eingerichtet zum Bestimmen, dass das Pixel schwarz ist;
- eine zweite Pixel-Beurteilungseinheit (202), die verwendet wird zum Bestimmen, ob alle der Pixel R=0, G=0 und B=0 erfüllen, wenn das Übertragungsformat der Bilddaten RGB ist; wenn ja, dann Bestimmen, dass das Pixel schwarz ist; und
- eine erste Bild-Beurteilungseinheit (201), die dafür eingerichtet ist, zu bestimmen, dass die Bilddaten die Vollschwarz-Bilddaten sind, wenn alle in den Bilddaten enthaltenen Pixel schwarz sind; und
- eine zweite Bild-Beurteilungseinheit (204), die dafür eingerichtet ist, zu bestimmen, dass die Bilddaten nicht die Vollschwarz-Bilddaten sind, wenn eines der Pixel nicht schwarz ist.

13. Mobiltelefon nach einem der Ansprüche 7 bis 12, wobei das Klingelsteuerungsmodul (524) Folgendes umfasst:
- eine Stummsteuereinheit (401), die ausgelegt ist zum Steuern des Klingelausgabemoduls (530) auf Stummausgabe, wenn die Stummsteuernachricht empfangen wird; und
- eine Klingeln-Beenden-Einheit (402), die eingerichtet ist zum Steuern des Klingelausgabemoduls (530), das Klingeln zu beenden, wenn die Klingeln-Beenden-Nachricht empfangen wird.

## Revendications

1. Procédé de commande de mise en sourdine d'un téléphone mobile par basculement, comprenant les étapes suivantes :
- à la réception d'un appel par un téléphone mobile (001), la détection d'une configuration de situation du téléphone mobile (S110, 21) ;
- si la configuration de situation est une configuration de sonnerie, la commande d'une caméra tournée vers l'avant (510) placée sur un plan où l'interface opérationnelle principale du téléphone mobile est située pour acquérir des données d'image à chaque instant préétabli ;
- la transmission des données d'image à une puce en bande de base de téléphone mobile (520); et
- l'utilisation de la puce en bande de base de téléphone mobile (520) pour déterminer que les données d'image sont ou non des données d'image entièrement noire et la mise en mémoire cache du résultat de la détermination (S120, 23) ;
- si les données d'image courantes sont des données d'image entièrement noire et des données d'image acquises à un instant précédent ne sont pas des données d'image entièrement noire, la commutation de la configuration de situation du téléphone mobile en une configuration de mise en sourdine (24, 25), et la commande de la caméra tournée vers l'avant pour arrêter l'acquisition de données d'image (S120, 002).

2. Procédé de commande de mise en sourdine d'un téléphone mobile par basculement selon la revendication précédente, dans lequel l'étape de transmission des données d'image à la puce en bande de base de téléphone mobile (520) comprend :
- l'utilisation d'un signal de synchronisation de trame de la caméra tournée vers l'avant (510) pour déclencher la caméra tournée vers l'avant (510) afin de transmettre les données d'image à la puce en bande de base de téléphone mobile (520).

3. Procédé de commande de mise en sourdine d'un téléphone mobile par basculement selon la revendication 2, dans lequel un seul signal de synchronisation de trame déclenche la caméra tournée vers l'avant (510) pour transmettre une seule trame des données d'image.

4. Procédé de commande de mise en sourdine d'un téléphone mobile par basculement selon l'une quelconque des revendications précédentes, comprenant en outre l'étape de :
- surveillance d'un raccrochage de téléphone (31) et lors de la détection d'un raccrochage de téléphone (31), la commande du téléphone portable pour arrêter la sonnerie (33), et la commande de la caméra tournée vers l'avant pour arrêter l'acquisition des données d'image (002) .

5. Procédé de commande de mise en sourdine d'un téléphone mobile par basculement selon l'une quelconque des revendications précédentes, dans lequel l'étape de détermination que les données d'image sont ou non des données d'image entièrement noire comprend :
- la détermination que chaque pixel dans les données d'image est ou non noir (305) ; et à la détection qu'un des pixels n'est pas noir, la détermination que les données d'image ne sont pas des données d'image entièrement noire (308).

6. Procédé de commande de mise en sourdine d'un téléphone mobile par basculement selon l'une quelconque des revendications précédentes, dans lequel l'étape de détermination que les données d'image sont ou non des données d'image entièrement noire comprend :
- si le format de transmission des données d'image est YUV, la détermination alors que tous les pixels des données d'image satisfont ou non Y=0, U=128 et V=128 ; dans l'affirmative, la détermination alors que le pixel est noir ;
- si le format de transmission des données d'image est RGB, la détermination alors que tous les pixels des données d'image satisfont ou non R=0, G=0 et B=0 ; dans l'affirmative, la détermination alors que le pixel est noir ; et
- quand tous les pixels inclus dans les données d'image sont noirs (305), la détermination alors que les données d'image sont les données d'image entièrement noire (307).

7. Téléphone mobile destiné à être mis en sourdine par basculement, comprenant :
- une puce en bande de base (520) qui comprend un module d'acquisition d'image (521), un module de jugement d'image entièrement noire (522), un module de jugement de basculement (523) et un module de commande de sonnerie (524) ;
- une caméra tournée vers l'avant (510) placée sur l'interface opérationnelle principale du téléphone mobile, adaptée pour acquérir des données d'image à chaque instant préétabli quand le téléphone mobile reçoit un appel et la configuration de situation du téléphone mobile est une configuration de sonnerie, et adaptée pour transmettre les données d'image au module d'acquisition d'image (521) ; et
- un module de production de sonnerie (530), dans lequel
- le module d'acquisition d'image (521) est adapté pour acquérir les données d'image transmises par la caméra tournée vers l'avant (510) quand le téléphone mobile reçoit un appel et la configuration de situation du téléphone mobile est une configuration de sonnerie ;
- le module de jugement d'image entièrement noire (522) est adapté pour déterminer que les données d'image acquises par le module d'acquisition d'image (521) sont ou non des données d'image entièrement noire et est adapté pour mettre en mémoire cache le résultat de la détermination ;
- le module de jugement de basculement (523) est adapté pour envoyer un message de commande de mise en sourdine au module de commande de sonnerie (524) quand le module de jugement d'image entièrement noire (522) détermine que les données d'image courantes sont des données d'image entièrement noire et les données d'image acquises à l'instant précédent ne sont pas des données d'image entièrement noire, et est adapté pour déclencher la puce en bande de base (520) pour commander la caméra tournée vers l'avant (510) afin d'arrêter en même temps l'acquisition des données d'image ; et
- le module de commande de sonnerie (524) est adapté pour commander le module de production de sonnerie (530) afin de produire différents modes de sonnerie.

8. Téléphone mobile destiné à être mis en sourdine par basculement selon la revendication 7, dans lequel la puce en bande de base (520) comprend en outre :
- un module de surveillance de raccrochage (525) adapté pour envoyer un message d'arrêt de sonnerie au module de commande de sonnerie (524) à la détection d'un raccrochage du téléphone, et adapté également pour déclencher la puce en bande de base (520) pour commander la caméra tournée vers l'avant (510) afin d'arrêter en même temps l'acquisition des données d'image.

9. Téléphone mobile destiné à être mis en sourdine par basculement selon l'une quelconque des revendications 7 ou 8, dans lequel la caméra tournée vers l'avant (510) est adaptée pour être déclenchée pour transmettre les données d'image au module d'acquisition d'image (521) sur la base d'un signal de synchronisation de trame de la caméra tournée vers l'avant (510).

10. Téléphone mobile destiné à être mis en sourdine par basculement selon la revendication 9, dans lequel la caméra tournée vers l'avant (510) est adaptée pour être déclenchée pour transmettre une trame des données d'image sur la base d'un signal de synchronisation d'image.

11. Téléphone mobile destiné à être mis en sourdine par basculement selon l'une quelconque des revendications 7 à 10, dans lequel le module de jugement d'image entièrement noire (522) est adapté pour déterminer que chaque pixel dans les données d'image est ou non noir ; et à la détection qu'un des pixels n'est pas noir, adapté pour déterminer que les données d'image ne sont pas des données d'image entièrement noire.

12. Téléphone mobile destiné à être mis en sourdine par basculement selon l'une quelconque des revendications 7 à 11, dans lequel le module de jugement d'image entièrement noire (522) comprend :
- une première unité de jugement de pixel (203) adaptée pour déterminer que tous les pixels des données d'image satisfont ou non Y=0, U=128 et V=128 quand le format de transmission des données d'image est YUV ; dans l'affirmative, adapté alors pour déterminer que le pixel est noir ;
- une seconde unité de jugement de pixel (202) utilisée pour déterminer que tous les pixels des données d'image satisfont ou non R=0, G=0 et B=0 quand le format de transmission des données d'image est RGB ; dans l'affirmative, déterminer alors que le pixel est noir ; et
- une première unité de jugement d'image (201) adaptée pour déterminer que les données d'image sont les données d'image entièrement noire quand tous les pixels inclus dans les données d'image sont noirs ; et
- une seconde unité de jugement d'image (204) adaptée pour déterminer que les données d'image ne sont pas les données d'image entièrement noire quand un des pixels n'est pas noir.

13. Téléphone mobile selon l'une quelconque des revendications 7 à 12, dans lequel le module de commande de sonnerie (524) comprend :
- une unité de commande de mise en sourdine (401) adaptée pour commander le module de production de sonnerie (530) afin de produire une mise en sourdine à la réception du message de commande de mise en sourdine ; et
- une unité d'arrêt de sonnerie (402) adaptée pour commander le module de production de sonnerie (530) afin d'arrêter la sonnerie lors de la réception du message d'arrêt de sonnerie.
